# EUROPEAN PATENT APPLICATION

(11) **EP 4 841 568 A1**
(43) Date of publication of application: **18.11.2026**
(21) Application number: 25176409.8
(22) Date of filing: 14.05.2025
(51) Int. Cl.: G06T 7/80

(54) **A COMPUTER IMPLEMENTED METHOD FOR DETERMINING A CALIBRATION OF A CAMERA**

(71) Applicant: TOYOTA JIDOSHA KABUSHIKI KAISHA, Toyota-shi, Aichi-ken 471-8571 (JP); Czech Technical University in Prague, 16000 Prague 6 (CZ)
(72) Inventor: CHUMERIN, Nikolay, 1140 Brussels (BE); OBDRZALEK, Stepan, 16000 Prague (CZ); MATAS, Jiri, 16000 Prague (CZ)
(74) Representative: Cabinet Beau de Loménie

(57) **Abstract**

The present invention concerns a computer implemented method for determining a calibration of a camera comprising:
determining whether a candidate calibration is the calibration of the camera based on a similarity between a first set of motion vectors and at least a second set of motion vectors, where:
- the first set of motion vectors is computed from images of a scene captured by the camera, and

the second set of motion vectors is computed based on projections of three-dimension (3D) points representative of the scene on a two-dimension (2D) surface using the candidate calibration, the 3D points and the camera moving in a known manner relative to each other during a time interval between the acquisition of said images of the scene by the camera.

## Description

### BACKGROUND OF THE INVENTION

### 1. Field of the invention

The present disclosure relates to camera calibration. More particularly, the present disclosure relates to an auto-calibration method capable of determining the calibration of any camera.

### 2. Description of Related Art

In many fields such as computer vision, robotics, photogrammetry, or augmented reality, accurate image processing and spatial measurements are important for reliable system performance. Cameras are fundamental tools in capturing visual data from the real world, but in order to utilize this visual data effectively for tasks like three-dimension (3D) reconstruction, object tracking, or precise measurements, it is necessary to calibrate the camera.

Cameras, may they be real or virtual, introduce various optical distortions, such as barrel distortion, where straight lines curve outward, or pincushion distortion, where lines bend inward. These distortions occur because the camera lens does not perfectly project light onto the sensor of the camera. Without compensation for these distortions, visual data may not correspond to the actual geometry of the observed scene. Therefore, calibration is necessary to model and correct these lens distortions, improving the quality of captured images and their reliability for processing tasks.

Furthermore, many computer-vision applications require accurate spatial measurements. For example, in 3D reconstruction, where the goal is to reconstruct the geometry of a scene from two-dimensional (2D) images, without accurate camera calibration, the correspondence between the world coordinates system and the camera coordinates system can be imprecise, leading to errors in reconstruction. Similarly, in systems like augmented reality or robotics, accurate camera calibration ensures that digital objects align correctly with real-world objects and that robotic systems navigate and interact accurately with their environment.

Camera calibration involves determining both the intrinsic parameters and the extrinsic parameters of a camera. The intrinsic parameters of a camera refer to the internal characteristics of the camera, such as the focal length, the optical centre, and lens distortion coefficients. These parameters describe how the camera maps the 3D world onto the 2D sensor plane.

The extrinsic parameters of a camera, on the other hand, describe the position and orientation, i.e. the pose, of the camera in the 3D world, i.e., the transformation between the camera coordinate system and the world coordinate system.

There are different types of methods for calibrating a camera. One of those types is auto-calibration. In camera auto-calibration methods, the objective is to determine the calibration of a camera without depending on specific calibration objects or scene configurations.

Auto-calibration methods are typically used to determine the relative pose between the camera to be calibrated and at least another camera and/or another type of sensor. This involves estimating a transformation matrix (rotation and translation) that aligns the coordinate systems from the different sensors into a common coordinate system.

This process is important for sensor fusion, which combines data from different sensors to improve perception and accuracy in applications like robotics, autonomous vehicles, and augmented reality.

As for the intrinsics parameters of the camera, they are typically calibrated independently using calibration targets.

Accordingly, there is a need for an improved method for camera auto-calibration that enhances accuracy and minimizes manual intervention.

### SUMMARY

The object of the present invention is to at least substantially remedy the above-mentioned drawbacks.

In this respect, the present disclosure relates to a computer implemented method for determining a calibration of a camera comprising:
determining whether a candidate calibration is the calibration of the camera based on a similarity between a first set of motion vectors and at least a second set of motion vectors, where:
- the first set of motion vectors is computed from images of a scene captured by the camera, and
- the second set of motion vectors is computed based on projections of three-dimension (3D) points representative of the scene, as they are positioned at the acquisition time of the images, on a two-dimension (2D) surface using the candidate calibration, the 3D points and the camera moving in a known manner relative to each other.

The present invention proposes a method capable of determining the calibration of a camera, i.e. both the intrinsic and the extrinsic parameters of the camera, based on recorded sequences of data which are processed in offline mode.

To do so, the proposed calibration method relies on the use of temporal 2D image correspondences as well as temporal 3D information obtained through known odometry.

More particularly, the method of the invention is based on the principle that motion vectors computed from images of a scene acquired by the camera to be calibrated are aligned with motion vectors computed from projected 3D points of the scene if and only if the candidate calibration, i.e. the parameterization of the candidate function that projects the 3D points to the 2D domain, is correctly and accurately determined. When this is the case, the candidate calibration is determined as being the actual calibration of the camera.

Odometry is a method used in robotics and navigation to estimate the position and orientation of a moving object by analysing data acquired by motion sensors.

It typically relies on sensors like wheel encoders or gyroscopes to measure the distance travelled, the direction of movement, and sometimes the rotation of the vehicle. By integrating these sensor readings over time, odometry calculates an estimate of the current position and orientation relative to a starting point.

In the present invention, odometry is used to determine for every individual 3D point of the scene, acquired by a first sensor, how it moves with respect to a given coordinate system during a time interval whose duration corresponds to the time between the acquisition of a first image and of at least one other image of the scene by the camera to be calibrated.

In particular implementations, the candidate calibration is determined as the calibration of the camera when the similarity is greater than or equal to a threshold.

As already mentioned, the more the motion vectors computed from the images acquired by the camera are aligned with the motion vectors computed from the projected 3D points, the more the candidate calibration is correctly and accurately determined.

By determining a candidate calibration as the actual calibration of the camera with the similarity of the two sets of motion vectors enable to ensure that this candidate calibration is accurate enough. One can adjust the desired level of accuracy by modifying the value of the threshold. This value can depend on the application envisioned for the camera.

In particular implementations, the similarity being represented by an objective *λ*, the candidate calibration is determined as the calibration of the camera when the objective *λ* reaches an extremum.

In particular implementations, the candidate calibration maximizing the objective *λ* is determined as the calibration of the camera.

In particular implementations, the objective *λ* is defined as follows: $λ = {\sum }_{\left\{\left(i, j\right)\right\}} {\sum }_{n = 1}^{{N}_{ij}} {max}_{m = 1}^{M} \left({s}_{p}\left({x}_{i}^{n}, {x}_{j}^{n}, {y}_{i}^{m}, {y}_{j}^{m}\right)⋅{s}_{m}\left({x}_{i}^{n}, {x}_{j}^{n}, {y}_{i}^{m}, {y}_{j}^{m}\right)\right) ,$
where *Nᵢⱼ* represent a set of feature point correspondences ${X}_{ij} = \left\{\left({x}_{i}^{n}, {x}_{j}^{n}\right)\right\}$*, n* ∈ *(1.. N_{íj}*) computed for the images acquired by the camera,
M represents the number of 3D points,
${y}_{i}^{m} , {y}_{j}^{m}$ are projections of the same m-th 3D point with m ∈ (1..*M*), and *sₚ* representing the proximity and *sₘ* representing the similarity of two motion vectors.

More particularly, the term *sₚ* is expressed as follows: ${s}_{p} = {κ}_{p} \left(\left‖\vec{{y}_{ι}^{m} {x}_{ι}^{n}}\right‖\right) ,$
where *κₚ*(*x*) is a unimodal positive function attaining maximum at zero, and
the term *sₘ* is expressed as follows/ ${s}_{m} = {κ}_{m} \left(\left‖\vec{{x}_{ι}^{n} {x}_{j}^{n}}-\vec{{y}_{ι}^{m} {y}_{j}^{m}}\right‖\right)$
where *κₘ*(*x*) is also a unimodal positive function attaining maximum at zero.

In particular implementations, the 3D points are stationary and the camera is moving along a known trajectory.

In particular implementations, the 3D point cloud is acquired by a LiDAR.

LiDAR is a remote sensing technology that uses laser pulses to measure distances to objects. As such, LiDAR is a rich source of metric data. The amount of LiDAR measurements available for camera calibration is several orders of magnitude higher than what is used in checkerboard-based methods, with a better coverage of image edges and corners. This leads to improved accuracy of calibration parameters, especially of higher-order distortion coefficients, which manifest strongly only on image edges.

In the method according to the invention, accurate motion vectors are obtained by moving each LiDAR-sampled 3D point of the scene by the inverse of the known egomotion of the LiDAR.

Egomotion refers to the sensor's movement, or the movement of the vehicle on which the sensors are embedded, relative to its environment over time.

In particular implementations, the LiDAR is collocated with the camera.

In particular implementations, the camera is a virtual camera.

According to a second aspect, the present invention concerns an apparatus for determining a calibration of a camera comprising at least one processor configured for:
determining whether a candidate calibration is the calibration of the camera based on a similarity between a first set of motion vectors and at least a second set of motion vectors,
where:
   - the first set of motion vectors is computed from images of a scene captured by the camera, and
   - the second set of motion vectors is computed based on projections of three- dimension (3D) points representative of the scene, as they are positioned at the acquisition time of the images, on a two-dimension (2D) surface using the candidate calibration, the 3D points and the camera moving in a known manner relative to each other.

Embodiments of the present invention also extend to programs which, when run on a computer or processor, cause the computer or processor to carry out the method described above or which, when loaded into a programmable device, cause that device to become the device described above. The program may be provided by itself or carried by a carrier medium. The carrier medium may be a storage or recording medium, or it may be a transmission medium such as a signal. A program embodying the present invention may be transitory or non-transitory.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- FIG. 1 illustrates a particular implementation of a system according to the invention,
- FIG.2 illustrates an example of the hardware architecture of the computer device of the system illustrated by Figure 1,
- FIG. 3 is a flowchart of a method for determining the calibration of a camera according to a particular implementation of the invention;
- FIG. 4 illustrates the motion vectors and the scoring terms contributing to the objective function *λ*.

### DETAILED DESCRIPTION OF EMBODIMENTS

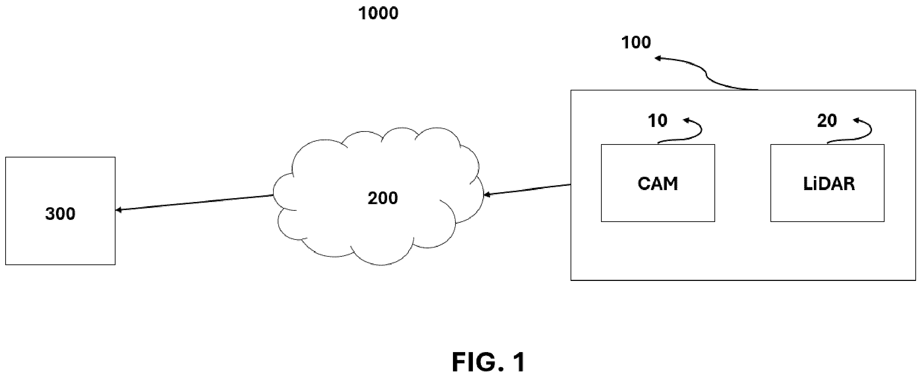

**Figure 1** illustrates a particular implementation of a system 1000 according to the invention.

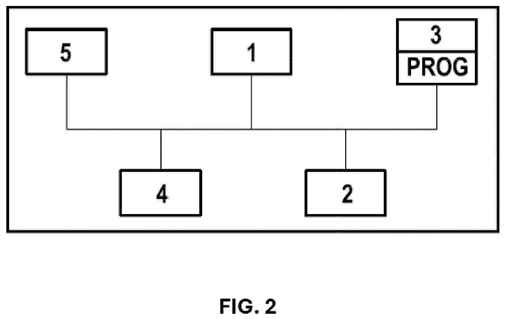

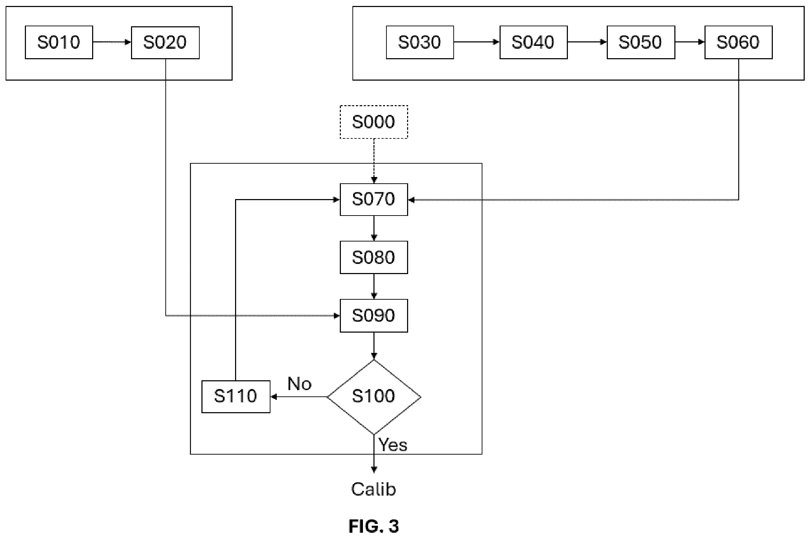

As illustrated by Figure 1, the system 1000 comprises:
- a vehicle 100; such as a car for example, comprising at least one camera 10 to be calibrated and at least another sensor 20. For example, the camera 10 can be an RGB for "Red-Green-Blue", grayscale or multispectral camera, a pinhole or fisheye camera or any other type of camera. The other sensor 20 can be a LiDAR for "Light Detection And Ranging" or another 3D sensor or depth sensor, e.g. a structured light sensor or a stereo camera pair, which is already calibrated. The interactions between the camera 10, the LiDAR 20 and the other components of the system 1000 are further detailed with respect to Figure 3;
- a computer device 300 configured to process the data collected by the camera 10 and the LiDAR in order to calibrate the camera 10. The functionalities of that module are further detailed with respect to Figure 2; and
- a communication network 200 enabling the transmission of data between the camera 10, the LiDAR 20 and the computer device 300.

It is to be noted that the data acquired by the camera 10 and the LiDAR 20 can be directly transmitted to the computer device 300 either by a direct wired communication link or a direct wireless communication link.

It also noted that the camera 10 and the LiDAR 20 can be embedded on different vehicles.

**Figure 2** illustrates an example of the hardware architecture of the computer device 300 of the system illustrated by Figure 1. Of course, other implementations of the computer device 300 can be envisioned as long as they enable the determination of the calibration of the camera 10.

To this end, the computer device 300 has the hardware architecture of a computer. As shown in Figure 2, the system comprises a processor 1. Although illustrated as a single processor 1, two or more processors can be used according to particular needs, desires, or particular implementations of the computer device 300. Generally, the processor 1 executes instructions and manipulates data to perform the operations of the system and any algorithms, methods, functions, processes, flows, and procedures as described in the present disclosure.

The computer device 300 also comprises communication means 5 which are used by the system for communicating with another electronic device that is communicatively linked to that computer device 300, for example for connecting the vehicle 100. Generally, the communication means 5 are operable to communicate with a radio network, such as the telecommunication network 200, and comprise logic encoded in software, hardware, or a combination of software and hardware. More specifically, the communications means 5 can comprise software supporting one or more communication protocols associated with communications such that the radio network or interface's hardware is operable to communicate physical signals within and outside of the illustrated system.

Although illustrated as a single communication means 5 in Figure 2, two or more communication means can be used according to particular needs, desires, or particular implementations of the system. The system can also comprise a random-access memory 2, a read-only memory 3, and a non-volatile memory 4.

The non-volatile memory 4 of the system constitutes a recording medium conforming to the invention, which is readable by processor 1 and on which is recorded a computer program PROG conforming to the invention, containing instructions for carrying out the steps of the method for calibrating the camera 10 according to the invention. The program PROG defines functional modules of the computer device 300, which are based on or control the aforementioned elements 1 to 5 of the computer device 300.

The different functional modules described above can be part of a single electronic device or can be distributed in a plurality of electronic devices belonging to that computer device 300.

**Figure 3** is a flowchart of a method for determining the calibration of a camera according to a particular implementation of the invention. In this example, the camera 10 and the sensor 20 are mounted on a car and are collocated. Of course, there are implementations in which the camera 10 and the sensor 20 are not collocated. Furthermore, in this example, the sensor 20 is a LiDAR. As already mentioned, the sensor 20 can be another 3D sensor or depth sensor.

In a first phase Ph1 of the method, steps S010 to S020 are implemented.

In a step S010, the camera 10 to be calibrated acquires at least two images {*I*₁, *I*₂ *... I_{N}*} at the corresponding times {*t*₁, *t* ... *t_{N}*}*.* Of course, it is understood that more than two images can be acquitted by the camera 10.

Once images {*I*₁, *I*₂ ... *I_{N}*} are acquired, a first set of motion vectors MVCam is computed (S020). In order to compute the first set of motion vectors MVCam, for example, pairs of images {(*Iᵢ, Iⱼ*), ...} captured at time {(*tᵢ, tⱼ*), ...} are drawn from the set of images acquired by the camera 10 during step S010.

The motion vectors of the first set of motion vectors MVCam is computed, for example, using the Kanade-Lucas-Tomasi (KLT) tracker. This method is based on the assumption that small regions of an image, called features, are consistently identified and localized in multiple images. Other methods for computing motion vector can, of course, be used instead of the KLT tracker.

In a second phase Ph2 of the method, steps S030 to S060 are implemented. The second phase Ph2 can be implemented beforehand, simultaneously, or after the first phase Ph1.

In a step S030, the LiDAR 20 acquires 3D points representative of a scene where each point represents a location in space in the sensor 10 coordinate system.

During this step S030, the LiDAR 20 proceeds to multiple acquisitions of the 3D points. Each new acquisition of 3D points is added to the previously acquired 3D points to create a more detailed, comprehensive, representation of the scene, improving spatial resolution over time.

Knowing the LiDAR calibration with respect to the vehicle 100, the coordinates of each of the accumulated 3D points of the scene are expressed in the vehicle 100 coordinate system (S040).

The coordinates of each accumulated 3D point in the scene, originally expressed in the vehicle 100 coordinate system, are transformed into the world coordinate system with the odometry accordingly interpolated based on the moments when each point was acquired by the LiDAR 20 (S050).

Knowing the times (*tᵢ, tⱼ*) at which the images (*Iᵢ, Iⱼ*) are acquired, and the odometry s defining the transformation between the world coordinate system and the vehicle coordinate systems at the times (*tᵢ, tⱼ*), 3D points as they were positioned in the vehicle coordinate system at *tᵢ* are extracted (S060) in order to obtain a first representation *Rᵢ* of the scene at that time, and 3D points as they were positioned in the vehicle coordinate system at *tⱼ* are extracted (S060) in order to obtain a first representation *Rⱼ* of the scene at that time. More than two representations of the scene can be obtained during step S060. Thus, at the end of the second phase Ph2, at least two 3D representations of the scene, *Rᵢ* and *Rⱼ*, are obtained from the accumulated 3D points acquired by the LiDAR. In the world coordinate system, the coordinates of the 3D points are constant in time except for those belonging to a moving object. On the other hand, the vehicle coordinate system moves relative to the world coordinate system, this movement being characterised using the odometry.

As already mentioned, the method of the invention is based on the principle that motion vectors computed from images of a scene acquired by the camera to be calibrated are aligned with motion vectors computed from projected 3D points of the scene if and only if the calibration used for projecting the 3D points is the actual calibration of the camera.

The objective of the method according to the invention is to find such a camera calibration, i.e. both the intrinsic and the extrinsic parameters of the camera 10, which aligns first set of motion vectors MVCam with a second set of motion vectors MV3DP computed based on the two 3D representations of the scene, *Rᵢ* and *Rⱼ* as explained below.

In a third phase Ph3 of the method, steps S070 to S110 are implemented. This third phase is implemented after the completion of the first phase Ph1 and the second phase Ph2 since the outputs of these two phases are used during the implementation of the third phase Ph3. The third phase Ph3 is implemented for a given candidate calibration and can be repeated as many times as necessary to determine the actual calibration of the camera 10.

To do so, in an initialization step S000, which is only implemented during the first implementation of the third phase Ph3, a first candidate calibration Cand-Cal-1 is randomly selected from, for example, among a set of candidate calibrations stored in the non-volatile memory 4 of the computer device 300.

Using this first candidate calibration Cand-Cal-1, the two 3D representations of the scene, *Rᵢ* and *Rⱼ* are projected (S070) on a 2D surface generating a first projection *Yᵢ* of the representation *Rᵢ* and a second projection *Yⱼ* of the representation *Rⱼ.* The projections *Yᵢ* and *Yⱼ* can be interpreted as if they were images of the 3D representation of the scene, acquired at times *tᵢ* and *tⱼ* by a camera whose calibration would be the first candidate calibration Cand-Cal-1.

More particularly, a 3D point of the representation *Rᵢ* is projected, using first candidate calibration Cand-Cal-1, to a first 2D point p. Then the same 3D point is identified in the representation *Rⱼ*, using odometry, and is projected again, still using first candidate calibration Cand-Cal-1, resulting in a second 2D point q.

The second set of motion vectors MV3DP is then computed (S080) form the projections *Yᵢ* and *Yⱼ*.

A motion vector belonging the second set of motion vectors MV3DP is for example the vector that represents the translation that associates the first 2D point p with the second 2D point q.

Once the second set of motion vectors MV3DP is computed, an objective function *λ* is evaluated (S090) in order to determine whether the candidate calibration Cand-Cal-1 is the actual calibration of camera 10 or not.

At the end of the first phase Ph1, a set of *Nᵢⱼ* feature point correspondences ${X}_{ij} = \left\{\left({x}_{i}^{n}, {x}_{j}^{n}\right)\right\}$, *n* ∈ (1..*N_{íj}*) is known for each image pair(*Iᵢ*, *Iⱼ*)*.* These feature point correspondences *Xᵢⱼ* correspond to the motion vectors of the first set of motion vectors MVCam.

At the end of steps S070 and S080, all M world-coordinate 3D points are twice projected to the image domain using the candidate calibration Cand-Cal-1 providing a set of image correspondences, ${Y}_{ij} = \left\{\left({y}_{i}^{m}, {y}_{j}^{m}\right)\right\}$, *m* ∈ (1..*M*), where ${y}_{i}^{m} , {y}_{j}^{m}$ are projections of the same m-th 3D point. This set of image correspondences corresponds to the second set of motion vectors MV3DP.

The objective function *λ* can then be expressed as follows: $λ = {\sum }_{\left\{\left(i, j\right)\right\}} {\sum }_{n = 1}^{{N}_{ij}} {max}_{m = 1}^{M} \left({s}_{p}\left({x}_{i}^{n}, {x}_{j}^{n}, {y}_{i}^{m}, {y}_{j}^{m}\right)⋅{s}_{m}\left({x}_{i}^{n}, {x}_{j}^{n}, {y}_{i}^{m}, {y}_{j}^{m}\right)\right) ,$

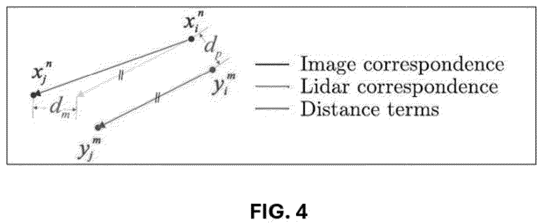

The summation runs over all the motion vectors *Xᵢⱼ* of the first set of motion vectors MVCam in all image pairs (*Iᵢ, Iⱼ*)*.* For each motion vector of the first set of motion vectors MVCam, only one 3D point - with maximum score value s - contributes to the sum. The score s is a product of two terms, *sₚ* for proximity and *sₘ* for similarity of the motion vectors. The terms, visualized in **Figure 4** where « Lidar correspondence » refers to image correspondences *Yᵢⱼ* », are: ${s}_{p} = {κ}_{p} \left({d}_{p}\right) = {κ}_{p} \left(\left‖\vec{{y}_{ι}^{m} {x}_{ι}^{n}}\right‖\right) #$ ${s}_{m} = {κ}_{m} \left({d}_{m}\right) = {κ}_{m} \left(\left‖\vec{{x}_{ι}^{n} {x}_{j}^{n}}-\vec{{y}_{ι}^{m} {y}_{j}^{m}}\right‖\right) #$

The functions *κ* are smooth kernels that give 1 for zero distance and decrease smoothly to help the iterative optimization. Normal-PDF shaped functions of different widths (sigma) can be used: ${κ}_{p} \left(x\right) = {e}^{- \frac{{\left(x/2\right)}^{2}}{4}}$ and ${κ}_{m} \left(x\right) = {e}^{- \frac{{\left(x/0.2\right)}^{2}}{4}}$

It appears that the score s is stricter on the motion vectors similarity than on their co-location. The intuition is that the image position is more sensitive to camera calibration than the length and orientation of the motion vectors, warranting therefore a wider attraction pool.

Once the objective function *λ* is evaluated, it determined whether the candidate calibration Cand-Cal-1 is the actual calibration of camera 10 or not (S100).

In a first implementation, if the objective function *λ*, which depends on the similarities between the first set of motion vectors MVCam and the second set of motion vectors MV3DP, is greater than or equal to a threshold, then the the candidate calibration Cand-Cal-1 is the actual calibration of camera 10.

In a second implementation, the candidate calibration Cand-Cal-1 is the actual calibration of camera 10 when the objective function *λ* reaches an extremum. More particularly, the the candidate calibration Cand-Cal-1 is the actual calibration of camera 10 when the objective function *λ* reaches a maximum.

When the candidate calibration Cand-Cal-1 is not the actual calibration of camera 10, i.e. when the candidate calibration Cand-Cal-1 is lower than the threshold or fails to reach an extremum, a second candidate calibration Cand-Cal-2 is selected (S110) and a second iteration of the third phase Ph3 is implemented.

In this second implementation of the third phase Ph3, two new projections *Yᵢ* and *Yⱼ* are computed by projecting representations *Rᵢ* and *Rⱼ* on the 2D surface using this second candidate calibration Cand-Cal-2.

As long as the objective function *λ* associated with a candidate calibration fails to reach an extremum or is not greater than or equal to the threshold, a new iteration of the third phase Ph3 is implemented with a new candidate calibration.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A computer implemented method for determining a calibration of a camera comprising:
determining whether a candidate calibration is the calibration of the camera based on a similarity between a first set of motion vectors and at least a second set of motion vectors,
where:
- the first set of motion vectors is computed from images of a scene captured by the camera, and
- the second set of motion vectors is computed based on projections of three-dimension (3D) points representative of the scene, as they are positioned at the acquisition time of the images, on a two-dimension (2D) surface using the candidate calibration, the 3D points and the camera moving in a known manner relative to each other.

2. The method of claim 1, wherein the candidate calibration is determined as the calibration of the camera when the similarity is greater than or equal to a threshold.

3. The method of claim 1, wherein, the similarity being represented by an objective *λ*, the candidate calibration is determined as the calibration of the camera when the objective *λ* reaches an extremum.

4. The method of claim 3, wherein the candidate calibration maximizing the objective *λ* is determined as the calibration of the camera.

5. The method according to claim 3 or to claim 4, wherein the objective *λ* is defined as follows: $λ = {\sum }_{\left\{\left(i, j\right)\right\}} {\sum }_{n = 1}^{{N}_{ij}} {max}_{m = 1}^{M} \left({s}_{p}\left({x}_{i}^{n}, {x}_{j}^{n}, {y}_{i}^{m}, {y}_{j}^{m}\right)⋅{s}_{m}\left({x}_{i}^{n}, {x}_{j}^{n}, {y}_{i}^{m}, {y}_{j}^{m}\right)\right) ,$
where *Nᵢⱼ* represent a set of feature point correspondences ${X}_{ij} = \left\{\left({x}_{i}^{n}, {x}_{j}^{n}\right)\right\}$, *n* ∈ *(1.. N_{íj}*) computed for the images acquired by the camera,
M represents the number of 3D points,
${y}_{i}^{m} , {y}_{j}^{m}$ are projections of the same m-th 3D point with m ∈ *(1..M),* and *sₚ* representing the proximity and *sₘ* representing the similarity of two motion vectors.

6. The method according to claim 5, wherein the term *sₚ* is expressed as follows: ${s}_{p} = {κ}_{p} \left(\left‖\vec{{y}_{ι}^{m} {x}_{ι}^{n}}\right‖\right) ,$
where *κₚ*(*x*) is a unimodal positive function attaining maximum at zero, and
the term *sₘ* is expressed as follows/ ${s}_{m} = {κ}_{m} \left(\left‖\vec{{x}_{ι}^{n} {x}_{j}^{n}}-\vec{{y}_{ι}^{m} {y}_{j}^{m}}\right‖\right)$
where *κₘ*(*x*) is also a unimodal positive function attaining maximum at zero.

7. The method according to any of claims 1 to 6, wherein the 3D points are stationary and the camera is moving along a known trajectory.

8. The method according to any of claims 1 to 7, wherein the 3D points are acquired by a LiDAR.

9. The method according to claim 8, wherein the LiDAR is collocated with the camera.

10. The method according to any claims 1 to 9, wherein the camera is a virtual camera.

11. An apparatus for determining a calibration of a camera comprising at least one processor configured for:
determining whether a candidate calibration is the calibration of the camera based on a similarity between a first set of motion vectors and at least a second set of motion vectors,
where:
- the first set of motion vectors is computed from images of a scene captured by the camera, and
- the second set of motion vectors is computed based on projections of three-dimension (3D) points representative of the scene, as they are positioned at the acquisition time of the images, on a two-dimension (2D) surface using the candidate calibration, the 3D points and the camera moving in a known manner relative to each other.

12. A computer program set including instructions for executing the steps of the method of any one of claims 1 to 10 when said program set is executed by at least one computer.

13. A recording medium readable by at least one computer and having recorded thereon at least one computer program including instructions for executing the steps of the method of any one of claims 1 to 10.

## Amended claims

### Amended claims in accordance with Rule 137(2) EPC.

1. A computer implemented method for determining a calibration of a camera comprising:
determining whether a candidate calibration is the calibration of the camera based on a similarity between a first set of motion vectors and at least a second set of motion vectors,
wherein:
- the first set of motion vectors is computed from images of a scene captured by the camera, and
- the second set of motion vectors is computed based on projections of three-dimension (3D) points representative of the scene, as they are positioned at the acquisition time of the images, on a two-dimension (2D) surface using the candidate calibration, the 3D points and the camera moving in a known manner relative to each other;
the candidate calibration being determined to be the calibration of the camera when an objective *λ*, representing the similarity between the first and second sets of motion vectors,
as defined by: $λ = {\sum }_{\left\{\left(i, j\right)\right\}} {\sum }_{n = 1}^{{N}_{ij}} {max}_{m = 1}^{M} \left({s}_{p}\left({x}_{i}^{n}, {x}_{j}^{n}, {y}_{i}^{m}, {y}_{j}^{m}\right)⋅{s}_{m}\left({x}_{i}^{n}, {x}_{j}^{n}, {y}_{i}^{m}, {y}_{j}^{m}\right)\right) ,$ reaches an extremum, where *Nᵢⱼ* represent a set of feature point correspondences ${X}_{ij} = \left\{\left({x}_{i}^{n}, {x}_{j}^{n}\right)\right\}$, *n* ∈ *(1.. Nᵢⱼ*) computed for the images acquired by the camera,
M represents the number of 3D points,
${y}_{i}^{m} , {y}_{j}^{m}$ are projections of the same m-th 3D point with m ∈ (1*..M*), and *sₚ* representing the proximity and *sₘ* representing the similarity of two motion vectors.

2. The method of claim 1, wherein the candidate calibration maximizing the objective *λ* is determined as the calibration of the camera.

3. The method according to claim 1 or claim 2, wherein the term *sₚ* is expressed as follows: ${s}_{p} = {κ}_{p} \left(\left‖\vec{{y}_{i}^{m} {x}_{i}^{n}}\right‖\right) ,$
where *κₚ(x)* is a unimodal positive function attaining maximum at zero, and
the term *sₘ* is expressed as follows/ ${s}_{m} = {κ}_{m} \left(\left‖\vec{{x}_{i}^{n} {x}_{j}^{n}}-\vec{{y}_{i}^{m} {x}_{j}^{m}}\right‖\right)$
where *κₘ*(*x*) is also a unimodal positive function attaining maximum at zero.

4. The method according to any of claims 1 to 3, wherein the 3D points are stationary and the camera is moving along a known trajectory.

5. The method according to any of claims 1 to 4, wherein the 3D points are acquired by a LiDAR.

6. The method according to claim 5, wherein the LiDAR is collocated with the camera.

7. The method according to any claims 1 to 6, wherein the camera is a virtual camera.

8. An apparatus for determining a calibration of a camera comprising at least one processor configured for:
determining whether a candidate calibration is the calibration of the camera based on a similarity between a first set of motion vectors and at least a second set of motion vectors,
wherein:
- the first set of motion vectors is computed from images of a scene captured by the camera, and
- the second set of motion vectors is computed based on projections of three-dimension (3D) points representative of the scene, as they are positioned at the acquisition time of the images, on a two-dimension (2D) surface using the candidate calibration, the 3D points and the camera moving in a known manner relative to each other,
the candidate calibration being determined to be the calibration of the camera when an objective *λ*, representing the similarity between the first and second sets of motion vectors,
as defined by: $λ = {\sum }_{\left\{\left(i, j\right)\right\}} {\sum }_{n = 1}^{{N}_{ij}} {max}_{m = 1}^{M} \left({s}_{p}\left({x}_{i}^{n}, {x}_{j}^{n}, {y}_{i}^{m}, {y}_{j}^{m}\right)⋅{s}_{m}\left({x}_{i}^{n}, {x}_{j}^{n}, {y}_{i}^{m}, {y}_{j}^{m}\right)\right) ,$ reaches an extremum, where *Nᵢⱼ* represent a set of feature point correspondences ${X}_{ij} = \left\{\left({x}_{i}^{n}, {x}_{j}^{n}\right)\right\}$, *n* ∈ *(1.. Nᵢⱼ*) computed for the images acquired by the camera,
M represents the number of 3D points,
${y}_{i}^{m} , {y}_{j}^{m}$ are projections of the same m-th 3D point with m ∈ (1..*M*), and *sₚ* representing the proximity and *sₘ* representing the similarity of two motion vectors.

9. A computer program set including instructions for executing the steps of the method of any one of claims 1 to 7 when said program set is executed by at least one computer.

10. A recording medium readable by at least one computer and having recorded thereon at least one computer program including instructions for executing the steps of the method of any one of claims 1 to 7.
